# EUROPÄISCHE PATENTSCHRIFT

(11) **EP 0 659 248 B1**
(45) Veröffentlichungstag und Bekanntmachung des Hinweises auf die Patenterteilung: **25.11.1998**
(21) Anmeldenummer: 93918968.4
(22) Anmeldetag: 09.09.1993
(51) Int. Cl.: F16H 37/06, F02B 67/04

(54) **ANTRIEBSAGGREGAT MIT VARIATOR, INSBESONDERE FÜR FAHRZEUGE**
DRIVING UNIT PROVIDED WITH A VARIATOR, IN PARTICULAR FOR MOTOR VEHICLES
ORGANE DE TRANSMISSION COMPRENANT UN VARIATEUR, NOTAMMENT POUR VEHICULES

(30) Priorität: 12.09.1992 DE 4230582; 08.01.1993 DE 4300286
(43) Veröffentlichungstag der Anmeldung: 28.06.1995
(73) Patentinhaber: BAVARIA-TECH, WERNER SCHLATTL, D-94034 Passau (DE)
(72) Erfinder: PLÖCHINGER, Ernst, D-94121 Salzweg (DE)
(74) Vertreter: Graf, Helmut, Dipl.-Ing.
(86) Internationale Anmeldenummer: DE9300831
(87) Internationale Veröffentlichungsnummer: WO9407056

(56) Entgegenhaltungen:
- EP-A- 0 138 739
- EP-A- 0 173 482
- EP-A- 0 349 151
- WO-A-86/03814
- FR-A- 2 499 192
- GB-A- 2 259 338

## Beschreibung

Die Erfindung bezieht sich auf ein Antriebsaggregat, insbesondere für Fahrzeuge, mit einem Verbrennungsmotor und mit von diesem angetriebener Motorwelle, die über einen eine Eingangswelle aufweisenden stufenlos arbeitenden Variator und ein eine Ausgangswelle sowie wenigstens drei umlaufende und miteinander zusammenwirkende Elemente aufweisendes Überlagerungsgetriebe ein Hilfsaggregat antreibt, wobei der Variator eine gesteuerte Übertragungsleistung an das Überlagerungsgetriebe zuführt oder wobei das Uberlagerungsgetriebe eine gesteuerte Überlagerungsleistung an den Variator zurückführt, wobei ein erstes umlaufendes Element über die Eingangswelle des Variators antriebsmäßig mit der Motorwelle verbunden ist, wobei ein zweites umlaufendes Element die Ausgangswelle und somit das Hilfsaggregat antreibt, und wobei ein drittes umlaufendes Element über eine weitere Welle des Variators mit diesem derart zusammenarbeitet, daß sich durch die Überlagerungsleistung eine in Abhängigkeit von einer Steuereinrichtung über Steuerkriterien gesteuerte Drehzahl für das angetriebene Hilfsaggregat ergibt.

In der Fahrzeugtechnik ist es bekannt und allgemein üblich, Hilfsaggregate über Keilriemen oder dergleichen Riementriebe direkt von der Motor- bzw. Kurbelwelle anzutreiben. Derartige Hilfsaggregate sind beispielsweise Lichtmaschinen, Wasserpumpen, Klimaanlagen, Hydraulik-Pumpen für Lenkhilfen, aber auch Lader bzw. Kompressoren für Ladeluft usw. Die Motordrehzahl ist aber beim Betrieb eines Fahrzeugs sehr unterschiedlich und kann je nach Betriebszustand beispielsweise zwischen 800 und 8000 U/min. liegen. Die Hilfsaggregate müssen daher bisher so ausgelegt werden, daß sie bereits bei niedrigen Motordrehzahlen eine zumindest ausreichend hohe Leistung bringen und auch noch der jeweiligen maximalen Drehzahl standhalten. Dies hat zur Folge, daß die Hilfsaggregate in der Regel überdimensioniert sind, was u.a. zu relativ hohen Herstellungskosten sowie zu einem hohen Gewicht dieser Hilfsaggregate führt.

Besonders nachteilig sind die unterschiedlichen Motordrehzahlen bei Antriebssystemen bei denen Kompressoren oder Lader für Ladeluft von der Motorwelle angetrieben werden. Diese Systeme haben zwar gegenüber Turboladern, die durch die Abgase des Verbrennungsmotors angetrieben werden, den grundsätzlichen Vorteil, daß der Lader insbesondere auch bei Änderungen des Betriebszustandes der Brennkraftmaschine, d.h. beispielsweise bei einer plötzlichen Erhöhung der Leistung, schnell und vorzögerungsfrei reagiert, das bei abgasgetriebenen Turboladern übliche ,,Turbo-Loch" also nicht auftritt, nachteilig ist aber auch bei diesem direkten Antrieb des Laders von der Motorwelle, daß bei niedrigen Drehzahlen die Leistung des Laders niedrig ist, oder aber der Lader überdimensioniert werden muß.

Bekannt ist ein Antriebsaggregat der Eingangs erwähnten gattungsgemäßen Art (WO 86/03814), bei dem über eine hydraulische Steuereinrichtung ein Überlagerungsgetriebe eine gesteuerte Überlagerungsleistung vom Variator zugeführt oder aber an dem Variator zurückgeführt wird, um so in einem Arbeitsbereich eine von der Eingangsdrehzahl weitestgehend konstante Ausgangsdrehzahl zu erhalten, womit sich die vorgenannten Nachteile vermeiden lassen. Die Übertragung der Leistung zwischen der Motorwelle und dem Hilfsaggregat erfolgt durch eine feste mechanische Ankopplung, mit der die Hauptleistung übertragen wird, sowie durch zusätzliche Überlagerung. Durch entsprechende Steuerung dieser Überlagerung, die im bekannten Fall hydraulisch erfolgt und die nur einen geringen Anteil der zu übertragenden Leistung ausmacht, wird die Drehzahl an der Ausgangswelle geregelt, d.h. von der Drehzahl der Motorwelle entkoppelt. Hierdurch ist es beispielsweise möglich, bereits bei geringen Motordrehzahlen eine ausreichend große Drehzahl für das angeschlossene Hilfsaggregat zu erreichen. Im unteren Drehzahlbereich steigt beispielsweise die Drehzahl an der Ausgangswelle mit der Motordrehzahl zunächst an, während in einem oberen Drehzahlbereich die Drehzahl an der Ausgangswelle des Überlagerungsgetriebes unabhängig von der Drehzahl des Motors konstant ist. Die Regelung der Drehzahl erfolgt nicht durch Vernichtung von Leistung. Wird nämlich Überlagerungsleistung zur Erhöhung der Drehzahl eingebracht, so wird diese dem Antrieb entnommen. Wird zur Reduzierung der Drehzahl Überlagerungsleistung am Überlagerungsgetriebe entnommen, so wird diese dem Antrieb wieder zugeführt.

Es läßt sich eine optimale Abstimmung ,,Motorkennfeld-Hilfsaggregat" erreichen, wobei insgesamt durch eine optimale Anpassung der Drehzahlen eine Optimierung des gesamten Antriebs, eine Schadstoffreduzierung bei gleichzeitiger Senkung der Betriebskosten und auch eine Reduzierung der Kosten und des Gewichts der Hilfsaggregate ermöglicht werden. Da Hilfsaggregate bei niedrigen Drehzahlen oftmals einen besonders schlechten Wirkungsgrad haben, was u.a. auch für Lichtmaschinen gilt, wird der Wirkungsgrad solcher Hilfsaggregate und damit auch der Wirkungsgrad des gesamten Antriebsaggregats durch die Erfindung wesentlich verbessert.

Speziell bei einem als Kompressor bzw. Lader für Ladeluft ausgebildeten Hilfsaggregat ist eine optimale Abstimmung Motor/Lader bzw. Verdichterkennfeld sowie auch eine Optimierung des Drehmomentverlaufs des Verbrennungsmotors möglich.

Bekannt ist weiterhin ein Überlagerungsgetriebe bestehend aus einem Hohlrad, aus einen Sonnenrad und aus an einem umlaufenden Steg vorgesehenen Planetenrädern (FR-A-2 499 192), die mit dem Hohlrad und dem Sonnenrad in Eingriff stehen. Das Hohlrad ist mit mehreren Riemenscheiben zum gleichzeitigen Antrieb mehrerer Hilfsaggregate versehen. Um eine von der Drehgeschwindigkeit des angetriebenen Steges unabhängige konstante Geschwindigkeit für die Riemenscheiben zu erhalten, ist eine mit dem Sonnenrad zusammenwirkende gesteuerte Bremseinrichtung vorgesehen.

Bekannt ist weiterhin ein System (EP-A-0 349 151), welches einen Turbolader vorsieht, der üblicherweise mittels einer Turbine durch die Abgase des Verbrennungsmotors angetrieben wird. Zusätzlich zu der Turbine ist ein unterstützender Elektro-Antrieb vorgesehen. Nachteilig ist bei diesem System u.a. der relativ hohe Aufwand sowie vor allem auch der Umstand, daß eine direkte antriebsmäßige Verbindung zwischen dem Lader und der Motorwelle fehlt.

Aufgabe der Erfindung ist es, einen Antrieb der Eingangs erwähnten Art so zu gestalten, daß ein weiteres Hilfsaggregat mit relativ konstanter Geschwindigkeit angetrieben werden kann, und zwar an einer zusätzlichen Welle des Antriebsaggregates.

Zur Lösung dieser Aufgabe ist ein Antriebsaggregat entsprechend dem Patentanspruch 1 ausgebildet.

Bei dem erfindungsgemäßen Antriebsaggregat wird die weitere Welle des Variators zum Übertragen der Uberlagerungsleistung bzw. zum Abführen der Uberlagerungsleistung aus dem Überlagerungsgetriebe zugleich zum Antrieb eines weiteren Aggregates verwendet. Dies ist nach einer der Erfindung zugrundeliegenden Erkenntnis möglich, da diese Welle bereits eine relativ konstante Geschwindigkeit besitzt, so daß für das an diese Welle angeschlossene Hilfsaggregat ein relativ konstanter Antrieb gewährleistet ist.

Der Variator ist beispielsweise mit dem Überlagerungsgetriebe als vollfunktionstüchtige Baugruppe gefertigt, so daß er lediglich am Verbrennungsmotor und an den Hilfsaggregaten angeflanscht werden muß. Der Variator ist zur Steuerung der Überlagerungsleistung beispielsweise mit elektrischen Mitteln, mit hydraulischen Mitteln oder aber als Keilriemenumschligungsgetriebe ausgebildet. Bei Ausbildung des Variators mit hydraulischen Mitteln besteht der Vorteil, daß das hydraulische Medium direkt mit Elementen oder Zahnrädern des Überlagerungsgetriebes zusammenwirken kann, das Überlagerungsgetriebe also gleichzeitig auch Mittel bildet, über die das Einbringen oder Abführen der Überlagerungsleistung erfolgt. Das mit der gesteuerten Drehzahl angetriebene Hilfsaggregat ist beispielsweise eine Lichtmaschine, eine Wasserpumpe, ein Verdichter bzw. Kompressor für Klimaanlagen, eine Hydraulik-Pumpe für Lenkhilfen, Lüftergetriebe usw.

Weiterbildungen der Erfindung sind Gegenstand der Unteransprüche.

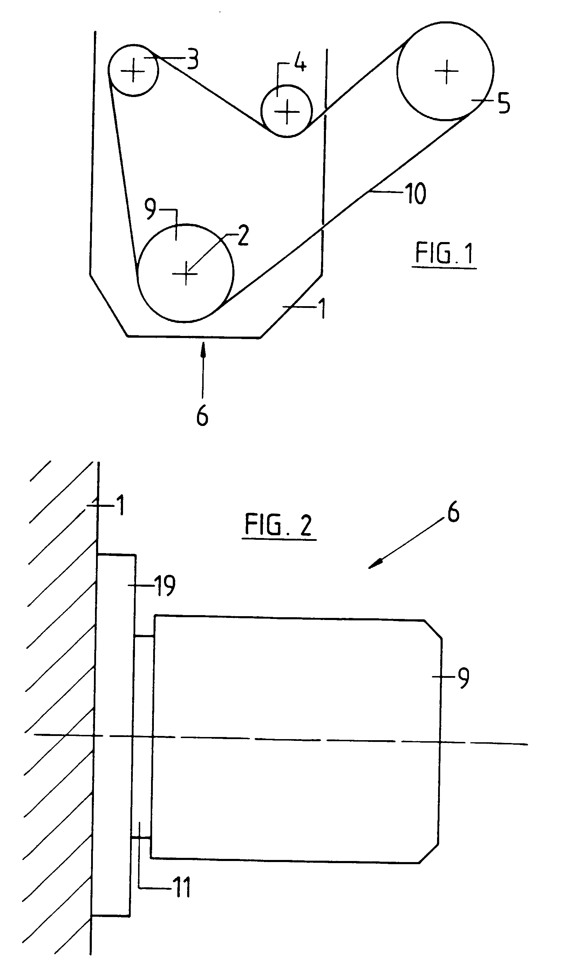

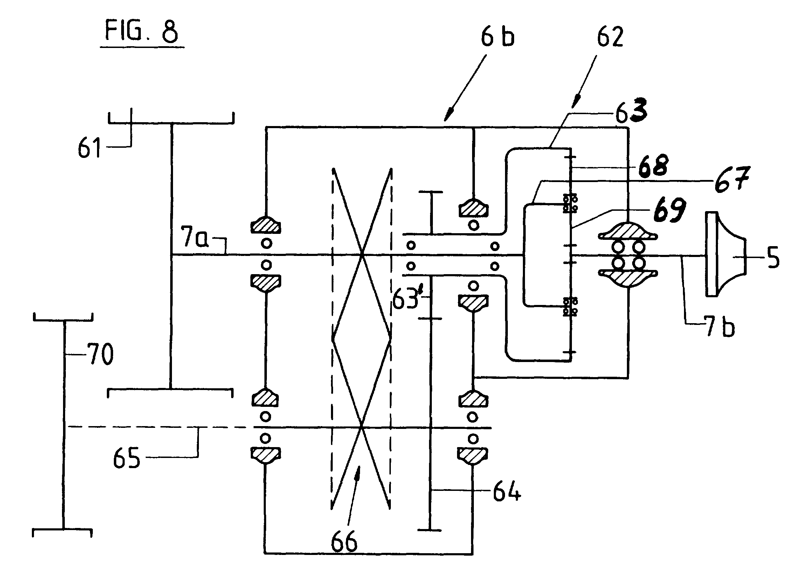

Zur weiteren Erläuterung wird auf die nachfolgende Beschreibung der Figuren verwiesen, von denen lediglich die Figur 8 eine Ausführung des erfindungsgemäßen Antriebs wiedergibt, bei dem die "weitere" Welle des Variators als zusätzliche Ausgangswelle zum Anschluß eines weiteren Hilfsaggregates genutzt ist, während die Figuren 1 - 7 sich ganz allgemein auf einen Antrieb mit einem Variator und Überlagerungsgetriebe beziehen. Im einzelnen zeigen die Figuren:
- Fig. 1: in vereinfachter Darstellung und in Stirnansicht einen als Verbrennungsmotor ausgebildeten Fahrzeugmotor mit verschiedenen, über einen Variator angetriebenen Hilfsaggregaten;
- Fig. 2: in schematischer Einzeldarstellung und in Seitenansicht den an dem Motorblock angeflanschten und mit der Kurbelwelle antriebsmäßig unmittelbar verbundenen Variator;
- Fig. 3: in sehr vereinfachter schematischer Darstellung eine Ausführungsform des Variators;
- Fig. 4: ein Diagramm, welches verschiedene Drehzahlen beim Variator der Fig. 3 in Abhängigkeit von der Drehzahl des Eingangs des Variators wiedergibt;
- Fig. 5: in sehr vereinfachter schematischer Darstellung eine weitere, mögliche Ausführungsform des Variators.
- Fig. 6: in vereinfachter Darstellung und in Seitenansicht einen als Verbrennungsmotor ausgebildeten Fahrzeugmotor, zusammen mit einem schematisch dargestellten Lader mit integrierten Variator;
- Fig. 7: einen Längsschnitt durch den Lader gemäß Fig. 6;
- Fig. 8: in vereinfachter schematischer Darstellung eine weitere, mögliche Ausführungsform des Variators.

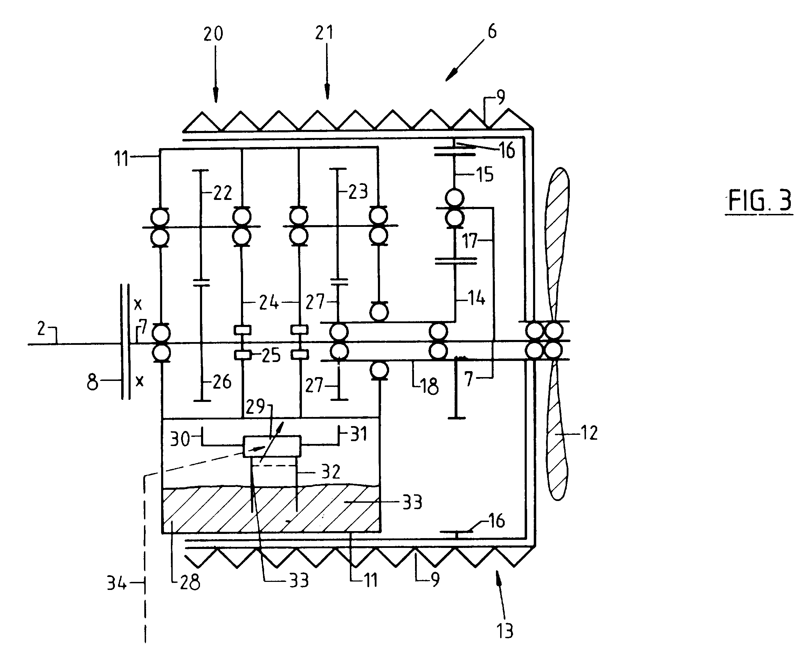

In den Figuren 1 bis 3 ist 1 ein als Brennkraftmaschine ausgebildeter Kolben-Motor eines Straßenfahrzeugs, beispielsweise eines Pkw. Mit der Kurbel- bzw. Motorwelle 2 sind verschiedene Hilfsaggregate antriebsmäßig verbunden, und zwar bei der dargestellten Ausführungsform eine Lichtmaschine 3, eine Wasserpumpe 4 und ein Lader bzw. Kompressor 5 für Ladeluft. Der Antrieb dieser Hilfsaggregate erfolgt über einen Variator 6, der mit seinem Eingang bzw. mit seiner Welle 7 über einen Flansch 8 unmittelbar mit der Kurbelwelle 2 verbunden ist (Fig. 3). Der Abtrieb bzw. Ausgang des Variators 6 ist bei dieser Ausführungsform von einer Riemenscheibe 9 gebildet, die Teil eines für sämtliche Hilfsaggregate gemeinsamen Riementriebes mit einem Antriebsriemen 10 (z.B. POLY-V-Riemen) ist. Wie nachstehend noch näher beschrieben, ist der Variator 6 derart steuerbar, daß ab einer bestimmten unteren Motordrehzahl, die beispielsweise der Leerlauf-Drehzahl des Verbrennungsmotors entspricht und in der Größenordnung zwischen 700 bis 1 000 U/min. liegt, die Ausgangsdrehzahl des Variators, d. h. die Drehzahl der Riemenscheibe 9 wesentlich höher liegt als die Eingangsdrehzahl des Variators und die Ausgangsdrehzahl in diesem Bereich mit der Motordrehzahl ansteigt, und zwar bis auf einen maximalen Wert, der dann auch bei noch höheren Motordrehzahlen nicht oder nur unwesentlich überschritten wird.

Der Variator 6 ist weiterhin grundsätzlich so ausgebildet, daß einerseits eine feste mechanische Ankopplung zwischen der Welle 7 und der Riemenscheibe 9 besteht und dieser festen Ankopplung, über die der weitaus größte Teil der Leistung übertragen wird, eine gesteuerte, beispielsweise in Abhängigkeit von der Drehzahl des Verbrennungsmotors 1 gesteuerte sehr viel kleinere Überlagerungsleistung überlagert ist. Der Variator 6 ist so ausgebildet, daß er sämtliche Funktionselemente aufweist, die zumindest teilweise in einem Gehäuse 11 untergebracht sind. Der Variator 6 bildet also mit allen seinen Funktionselementen eine bauliche Einheit, die einfach und problemlos am Verbrennungsmotor 1 montiert werden kann.

Die Fig. 3 zeigt den prinzipiellen Aufbau des Variators 6 näher im Detail. Die Welle 7 ist im Gehäuse 11 gelagert und bildet eine zentrale Welle des Variators 6. An dem dem Flansch 8 abgewandten Ende sitzt auf der Welle 7 ein Kühlgebläse 12 zum Kühlen des Variators.

Am Gehäuse 11 ist ein Planetenradgetriebe 13 vorgesehen, welches das Überlagerungsgetriebe des Variators 6 bildet und u.a. aus dem auf der zentralen Welle 7 gelagerten Sonnenrad 14, aus Planetenrädern 15, von denen in der Fig. 3 der einfacheren Darstellung wegen lediglich eines gezeigt ist, sowie aus dem das Sonnenrad 14 und die Planetenräder 15 umgebenden Hohlrad 16 besteht, welch letzteres Teil der Riemenscheibe 9 ist. Es versteht sich, daß das Hohlrad 16 achsgleich mit der Achse der Welle 7 bzw. mit der Achse des Sonnenrades 14 angeordnet ist und daß die Planetenräder 15, die mit ihren Achsen parallel zu den Achsen des Sonnenrades 14 und des Hohlrades 16 angeordnet sind, mit ihrer Verzahnung sowohl mit der Verzahnung des Sonnenrades 14 als auch mit der Verzahnung des Hohlrades 16 in Eingriff stehen. Die Planetenräder 15 sind an einem Planetenradträger oder Steg 17 drehbar gelagert, der fest an der Welle 7 vorgesehen ist.

Das Sonnenrad 14 ist an einer Hohlwelle 18 fest vorgesehen, die auf der Welle 7 drehbar gelagert ist. Die das Hohlrad 16 aufweisende Riemenscheibe 9 ist napf- oder schalenförmig ausgebildet, umschließt das Planetengetriebe 13 bzw. deckt dieses Getriebe nach außen hin ab, ist auf der Welle 7 drehbar gelagert und umschließt auch teilweise das Gehäuse 11.

Das Kühlgebläse 12, welches außerhalb der Riemenscheibe 9 angeordnet ist, ist antriebsmäßig mit dieser Riemenscheibe 9 verbunden.

Bei der dargestellten Ausführungsform ist das Planetengetriebe 13 so ausgebildet, daß es eine Standardübersetzung von i = 0,66 aufweist, d.h. bei feststehendem Sonnenrad 14 entspricht die Drehzahl der Riemenscheibe 9 etwa dem 1,5-fachen der Drehzahl der Welle 7 bzw. der Kurbelwelle. Die Standardübersetzung kann grundsätzlich auch andere Werte aufweisen. Bevorzugt liegt diese Standardübersetzung i aber im Bereich zwischen etwa 0,6 bis 0,8.

Im Gehäuse 11, welches einen Flansch 19 zur Befestigung am Motorblock des Verbrennungsmotors 1 besitzt, sind zwei jeweils wahlweise als Pumpe oder Motor wirksame Hydraulikanordnungen 20 und 21 vorgesehen. Diese Anordnungen sind bei der dargestellten Ausführungsform als hydraulische Zahnradpumpen bzw. Zahnradmotoren ausgeführt und in der Fig. 3 jeweils mit einem Zahnrad 22 (Anordnung 20) bzw. 23 (Anordnung 21) schematisch dargestellt. Die Zahnräder 22 und 23, die mit ihren Achsen parallel zur Achse der Welle 7 liegen, sind im Gehäuse 11 bzw. in dortigen Zwischenwänden 24 drehbar gelagert, durch die auch die Welle 7 unter Verwendung von Dichtungen 25 abgedichtet hindurchgeführt ist.

Die Anordnung 20 bzw. deren Zahnrad 22 ist antriebsmäßig mit einem auf der Welle 7 sitzenden Zahnrad 26 verbunden. Die Anordnung 21 bzw. das dortige Zahnrad 22 wirkt antriebsmäßig mit einem Zahnrad 27 auf der Hohlwelle 18 des Sonnenrades 14 zusammen.

Im Gehäuse 11 ist weiterhin ein Reservoir bzw. Behälter 28 zur Aufnahme eines Vorrats an Hydraulik-Öl vorgesehen, und zwar bei der für die Fig. 3 gewählten Darstellung unterhalb der Welle 7 und auch unterhalb der Anordnungen 20 und 21. Weiterhin ist im Gehäuse 11 eine Steuerventileinrichtung 29 vorgesehen, die über Leitungen 30 - 33 mit den Anordnungen 20 und 21 bzw. mit dem Behälter 28 verbunden ist und über die sowohl die Funktion der Anordnungen 20 und 21 jeweils als Pumpe oder Motor bzw. die Funktion der Leitungen 30 - 33 und damit die Wirkungsrichtung der überlagerten Leistung, als auch die Menge der hydraulischen Flüssigkeit, die von der jeweils als Pumpe wirkenden Anordnung 20 bzw. 21 an die jeweils als Motor wirkende Anordnung 21 bzw. 20 geliefert wird, und damit die Größe der überlagerten Leistung steuerbar sind. Die Steuerventilanordnung 29 wird bei der dargestellten Ausführungsform über eine elektrische Steuerleitung 34 von einer außerhalb des Variators angeordneten und nicht dargestellten Elektronik angesteuert.

Bei der in der Fig. 3 dargestellten Ausführungsform wird die Überlagerungsleistung, die sowohl eine positive Leistung (Anordnung 21 wirkt als Hydraulik-Motor) als auch eine negative Leistung (Anordnung 21 wirkt als Pumpe) sein kann, mittels des Zahnrades 27 über das Sonnenrad 14 in das Planetenradgetriebe 13 eingebracht bzw. aus diesem entnommen. Das Einbringen und Entnehmen der Überlagerungsleistung am Sonnenrad 14 hat u.a. den zusätzlichen Vorteil, daß geringe Momente und somit eine sehr geringe Überlagerungsleistung für die Steuerung ausreichen. Hiermit können auch die Leistungsverluste insgesamt sehr klein gehalten werden, obwohl für die Übertragung der Überlagerungsleistung über die Steuerventilanordnung 29 und die Anordnungen 20 und 21 ein relativ schlechter Wirkungsgrad mit Verlusten bis zu 50 % in Kauf genommen werden muß. Kleine Momente bedeuten auch, daß die Anordnungen 20 und 21 in ihrer Baugröße bzw. in ihrem Volumen kleingehalten werden können.

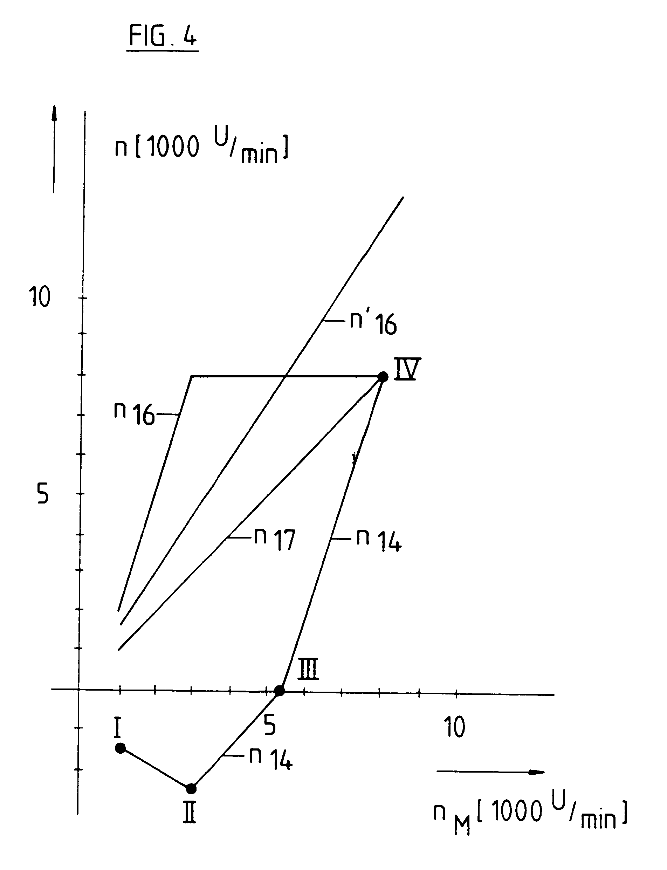

Die Fig. 4 zeigt bei der angenommenen Standard-Übersetzung von i = 0,66 in Abhängigkeit von der Motordrehzahl n_{M} (Drehzahl der Kurbelwelle 2) die Drehzahlen verschiedener Elemente des Variators 6 nämlich:
- n'₁₆: Drehzahl des Hohlrades 16 und damit der Riemenscheibe 9 bei feststehendem bzw. blockiertem Sonnenrad 14;
- n₁₇: Drehzahl des mit der Welle 7 unmittelbar verbundenen Steges 17 der Planetenräder 15;
- n₁₄: den Verlauf der von der Steuerventilanordnung 29 gesteuerten Drehzahl des Sonnenrades 14, und zwar zwischen verschiedenen Punkten die mit I-IV bezeichnet sind;
- n₁₆: einen Verlauf der Drehgeschwindigkeit des Hohlrades 16 bei wiedergegebenen Kurvenverlauf I-IV der Drehzahl n₁₄ des Sonnenrades.

Im einzelnen zeigt die Fig. 4, daß die Drehzahl n'₁₆ bei blockiertem Sonnenrad 14 proportional mit der Motordrehzahl nₘ zunimmt, und zwar entsprechend der Standard-Übersetzung. Die Drehzahl n₁₆ steigt zunächst in einem Bereich der Motordrehzahl zwischen etwa 1 000 bis 3 000 U/min. linear mit der Motordrehzahl n_{M} an. Im Bereich zwischen 3 000 bis etwa 8 000 U/min. der Motordrehzahl bleibt die Drehzahl n₁₆ etwa konstant bei 8 000 U/min. Dieser Verlauf der Drehzahl n₁₆ ergibt sich aus dem Verlauf der Drehzahl n₁₄. Diese weist zwischen den Punkten I und III einen negativen Wert auf, d.h. das Sonnenrad 14 wird in einer der Drehrichtung der Welle 7 entgegengesetzten Richtung angetrieben, wofür in diesem Bereich die Anordnung 20 als Pumpe und die Anordnung 21 als Motor wirken. Speziell steigt die Drehzahl n₁₄ zwischen den Punkten I und II, die einer Motordrehzahl von etwa 1 000 bzw. 3 000 U/min. entsprechen, linear mit der Motordrehzahl n_{M} an. Im Bereich zwischen den Punkten II und III nimmt die Drehzahl n₁₄ linear mit der Motordrehzahl n_{M} ab, wobei der Punkt III den Null-Durchgang darstellt. Anschließend, d.h. zwischen den Punkten III und IV steigt die Drehzahl n₁₄ mit der Motordrehzahl linear an und verläuft im positiven Bereich, d.h. das Sonnenrad 14 läuft gleichsinnig mit der Welle 7 um, wofür die Anordnung 20 als Motor, der die Welle 7 zusätzlich antreibt, und die Anordnung 21 als Pumpe wirken. Diese bringt eine negative Überlagerungsleistung in das Planetengetriebe 13 ein, d.h. diesem Getriebe wird Überlagerungsleistung entnommen. In dem Punkt IV ist ein Gleichlauf sämtlicher Elemente des Planetenradgetriebes 13 erreicht.

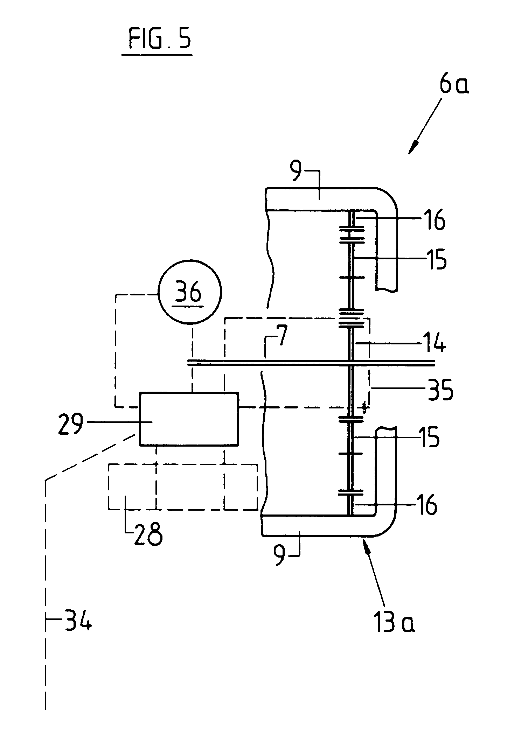

Die Fig. 5 zeigt in sehr vereinfachter und schematischer Darstellung als weitere, mögliche Ausführungsform einen Variator 6a, der sich von dem Variator 6 im wesentlichen nur dadurch unterscheidet, daß die auf das Sonnenrad 14 einwirkende Pumpen-Motor-Anordnung 21 nicht gesondert vorgesehen ist, sondern von dem Sonnenrad 14 und den Planetenrädern 15 gebildet ist, letztere also sowohl Funktionsbestandteil des in der Fig. 5 mit 13a bezeichneten Planetenradgetriebes als auch der Pumpen-Motor-Anordnung sind, über die die Überlagerungsleistung am Planetenradgetriebe eingebracht wird. Mit der unterbrochenen Linie 35 ist diese Funktion des Planetengetriebes 13a zugleich als Pumpen-Motor-Anordnung angedeutet.

Der Variator 6a besitzt weiterhin eine der Anordnung 20 entsprechende Anordnung 36, die entweder ebenfalls von einer Zahnrad-Motor-Pumpenanordnung oder von einer anderen hydraulischen Verdrängungsmotor- und Pumpenanordnung gebildet ist. Weiterhin besitzt der Variator 6a wiederum die Steuerventileinrichtung 29.

Den Variatoren 6 und 6a ist gemeinsam, daß die Überlagerungsleistung, die am Planetenradgetriebe 13 bzw. 13a zugeführt wird (Anordnung 20 bzw. 36 wirkt als Pumpe/Anordnung 21 bzw. Planetenradgetriebe 13a wirkt als Motor) dem Antrieb, d.h. bei den dargestellten Ausführungsformen der Welle 7 entnommen wird und daß die Überlagerungsleistung, die am Planetenradgetriebe 13 bzw. 13a entnommen wird (Anordnung 21 bzw. Planetenradgetriebe 13a wirken als Pumpe/Anordnung 20 bzw. 36 wirkt als Motor) dem Antrieb, d.h. bei der dargestellten Ausführungsform der Welle 7 zugeführt wird, so daß (abgesehen von nicht vermeidbaren Verlusten) bei der Regelung der Geschwindigkeit bzw. Drehzahl der Riemenscheibe 9 keine Energie vernichtet wird.

Abweichend von den beschriebenen Ausführungsformen ist es weiterhin auch möglich, den jeweiligen Variator 6 bzw. 6a unmittelbar an einem Hilfsaggregat vorzusehen bzw. anzuflanschen. Der Variator kann auch Bestandteil eines derartigen Hilfsaggregates sein.

Den beschriebenen Ausführungen ist weiterhin gemeinsam, daß das Einbringen bzw. Abführen der Überlagerungsleistung auf hydraulischem Wege erfolgt. Hierdurch ist unabhängig von der speziellen Konstruktion grundsätzlich eine kompakte Bauform für den Variator 6 bzw. 6a möglich, da die Hydraulik bei kleiner Baugröße große Leistungen ermöglicht.

Durch den Variator 6 bzw. 6a können die Hilfsaggregate unabhängig von der Drehzahl des Verbrennungsmotors 1 in einem optimalen Drehzahlbereich betrieben werden, so daß für diese Aggregte eine kleine, kompakte Bauform erreicht werden kann. Einen besonderen Vorteil hat der Variator 6 bzw. 6a für den Antrieb des Laders 5. Zum einen wird durch die direkte antriebsmäßige Verbindung zwischen dem Lader 5 und der Kurbelwelle des Verbrennungsmotors 1 ein verzögerungsfreier Antrieb des Laders 5 sichergestellt. Zum anderen wird durch die geregelte Ausgangsdrehzahl des Variators 6 bzw. 6a auch erreicht, daß bereits bei geringen Motordrehzahlen eine ausreichend große Menge an Ladeluft und ein ausreichend großer Ladedruck zur Verfügung stehen, in den Arbeitsräumen bzw. Zylindern des Verbrennungsmotors also bereits bei geringer Motordrehzahl eine hohe Expansionsleistung und damit ein hohes Drehmoment erreicht wird.

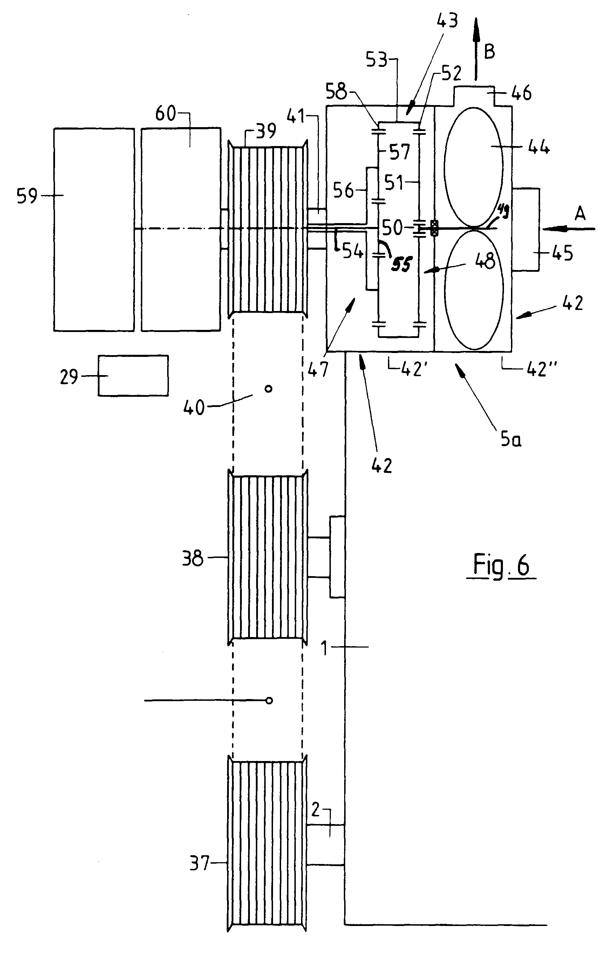

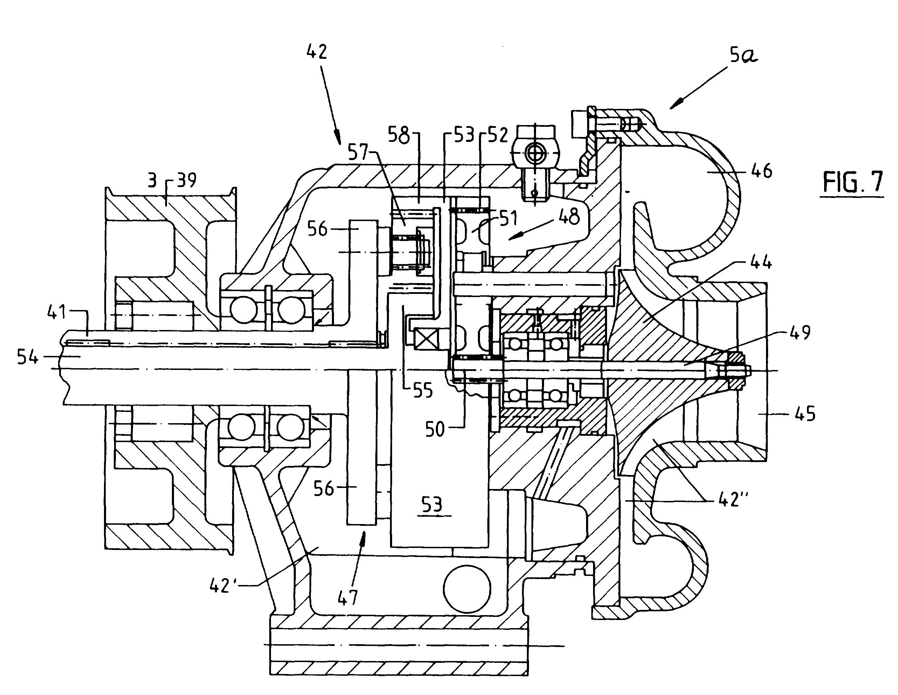

In den Fig. 6 und 7 ist 1 wiederum der Verbrennungsmotor und 2 die umlaufend angetriebene Kurbelwelle dieses Motors. Über einen von den Riemenscheiben 37, 38, 39 und dem Riemen 40 gebildeten Riemenantrieb wird der am Block des Verbrennungsmotors 1 befestigte Lader 5a angetrieben. Die Riemenscheibe 37 sitzt dabei auf der Kurbelwelle 2, die Riemenscheibe 38 auf der Welle eines weiteren, nicht bezeichneten Hilfsaggregates (z.B. einer Lichtmaschine oder Wasserpumpe), und die Riemenscheibe 39 auf der als Hohlwelle ausgebildeten Antriebswelle 41 des Laders 5a.

Der Lader 5a besitzt ein mehrteiliges Gehäuse 42, in dessen Gehäuseteil 42' eine Getriebeanordnung 43 und in dessen Gehäuseteil 42'' und getrennt von der Getriebeanordnung 43 ein durch diese Getriebeanordnung angetriebener Rotor 44 angeordnet ist, und zwar für eine rotierende Bewegung um eine Längsachse, die achsgleich mit der Achse der Antriebswelle 41 liegt. An der der Antriebswelle 41 und der Riemenscheibe 39 abgewandten Stirnseite des Gehäuses 42 ist am Gehäuseteil 42'' ein achsgleich mit der Längsachse angeordneter Ansaugstutzen 45 zum Ansaugen von Luft gebildet. Die von dem Lader 5a komprimierte Luft über einen den Rotor 44 umgebenden ringförmigen Kanal und einen Auslaßstutzen 46 abgeführt, wie dies in der Fig. 6 mit den Pfeilen A und B dargestellt ist.

Die Getriebeanordnung 43, die in dem nach außen hin geschlossenen und Getriebeöl enthaltenden Gehäuseteil 42' untergebracht ist, besteht aus zwei Planetengetrieben 47 und 48, die in der Antriebsverbindung zwischen der Antriebswelle 41 und einer Welle 49, die um die Längsachse drehbar im Gehäuse 42 gelagert ist und auf der der Rotor 44 sitzt, in Serie angeordnet sind. Das Planetengetriebe 48, welches als Übersetzungsgetriebe zur Erzielung einer hohen Drehzahl von der Welle 49 dient, weist ein auf dieser Welle 49 vorgesehenes und als Sonnenrad 50 wirkendes Ritzel sowie wenigstens ein am Gehäuse 42 drehbar gelagertes und in das Sonnenrad 50 eingreifendes Planetenrad 51 auf, welches auch mit einer Verzahnung 52 eines Hohlrades 53 in Eingriff steht. Das Hohlrad 53 ist im Gehäuseteil 42'um die Längsachse frei drehbar gelagert, und zwar auf einer von der Antriebswelle 41 umschlossenen Welle 54, die bis in das Gehäuseteil 42' hineinreicht.

Das dem Planetengetriebe 48 vorgeschaltete Planetengetriebe 47 dient als Überlagerungsgetriebe und weist hierfür wenigstens ein an der Welle 54 vorgesehenes Sonnenrad 55, wenigstens ein an einem um die Längsachse umlaufenden Steg 56 vorgesehenes bzw. drehbar gelagertes Planetenrad 57 auf, welches mit dem Sonnenrad 55 sowie mit einer weiteren Verzahnung 58 des Hohlrades 53 in Eingriff steht. Eine Besonderheit der Getriebeanordnung 43 besteht somit darin, daß für beide Planetengetriebe 47 und 48 ein gemeinsames Hohlrad 53 vorgesehen ist, d.h. beide Planetengetriebe 47 und 48 über dieses gemeinsame Hohlrad 53 antriebsmäßig gekoppelt sind.

Die als Hohlwelle ausgebildete Antriebswelle 41, auf der die Riemenscheibe 39 sitzt, sowie auch die Welle 54, stehen über die dem Gehäuse 42 abgewandte Seite der Riemenscheibe 39 vor. Die Welle 54 reicht bis zu einer Pumpen-Motor-Anordnung 59, die der Pumpen-Motor-Anordnung 21 von ihrer Funktion her entspricht und zum Einbringen sowie Entnehmen von Überlagerungsleistung in das bzw. aus dem Planetengetriebe 47 dient. Die Pumpen-Motor-Anordnung 59 wird wiederum über ein Sonnenrad, d.h. über das Sonnenrad 55 mit dem Planetengetriebe 47 gekoppelt, so daß sich auch bei dieser Ausführung hierdurch die grundsätzlichen Vorteile ergeben, die vorstehend in Verbindung mit der Ausführungsform nach Fig. 3 für diese Ankopplung der zum Einbringen und Entnehmen der Überlagerungsleistung dienenden Pumpen-Motor-Anordnung 21 angegeben wurden (kleine Drehmomente, geringe Überlagerungsleistung, reduzierte Leistungsverluste, kleine Baugrößen für die Pumpen-Motor-Anordnungen).

Die Antriebswelle 41 ist mit der Pumpen-Motor-Anordnung 60 verbunden, die von ihrer Funktion her der Anordnung 20 entspricht. Weiterhin ist in der Fig. 6 auch die Steuerventilanordnung 29 angegeben.

Die Steuerung des von dem Planetengetriebe 47 und den Pumpen-Motor-Anordnungen 59 und 60 gebildeten Variators, der teilweise, d.h. in bezug auf das Planetengetriebe 47, in dem Lader 5a integriert ist, erfolgt in gleicher Weise, wie dies oben in Verbindung mit den Figuren 3 und 4 beschrieben wurde, und zwar derart, daß bereits bei einer relativ geringen Drehzahl der Kurbelwelle 2 eine hohe Drehzahl für die Welle 49 und ab einer bestimmten Drehzahl der Kurbelwelle 2 bzw. des Motors 1 eine konstante Drehzahl für die Welle 49 erreicht wird, und zwar in gleicher oder ähnlicher Weise, wie dies in der Fig. 4 für die Drehzahl n₁₆ dargestellt ist.

Die Integrierung des Planeten- oder Überlagerungsgetriebes 47 in den Lader 5a führt zu einer sehr kompakten und vereinfachten Konstruktion, bei der insbesondere auch eine Schmiermittelversorgung gemeinsam für das Übersetzungsgetriebe bzw. Planetengetriebe 48 und das Überlagerungsgetriebe bzw. Planetengetriebe 47 vorgesehen ist.

Die Pumpen-Motor-Anordnung 60 kann, sofern dies erforderlich oder erwünscht ist, an einer anderen Stelle vorgesehen werden und ist dann antriebsmäßig mit der Antriebeswelle 41 beispielsweise über den Riemen 40 verbunden.

Figur 8 zeigt entsprechend der Erfindung eine Ausführungsform mit einem Variator 6b, der mit seinem Ausgang bzw. mit seiner Ausgangswelle den Lader 5 antreibt. An seinem Eingang bzw. an seiner Eingangswelle 7a ist eine Riemenscheibe 61 vorgesehen, über welche der Variator beispielsweise von der Kurbelwelle 2 des Verbrennungsmotors 1 angetrieben wird.

Als Überlagerungsgetriebe weist auch der Variator 6b ein, Planetengetriebe 62, dessen Hohlrad 63 über zwei Zahnräder 63',64 mit einer Hilfswelle 65 antriebsmäßig verbunden ist, die ihrerseits über Übertragungsmittel 66, die zum Entnehmen, ggfs. auch zum Rückführen der Überlagerungsleistung aus dem Antrieb (Welle 7a) bzw. an den Antrieb 7a und dem entsprechend "erste Mittel" im Sinne der Erfindung sind. Die Übertragungsmittel sind beispielsweise von Pumpen-Rotoranordnungen entsprechend den Anordnungen 20 und 21 und den zugehörigen Steuerelementen gebildet.

Als Übertragungsmittel 66 können aber auch andere Elemente verwendet werden, die für eine Entnahme, ggfs. auch für eine Rückführung der Überlagerungsleistung von der Welle 7a bzw. an die Welle 7a geeignet sind, beispielsweise ein mechanisches Getriebe mit stufenlos einstellbarer Übersetzung.

Der die Planetenräder 68 aufweisende Steg 67 des Planetengetriebes 62 ist mit der Eingangswelle 7a verbunden. Das Sonnenrad 69 ist an der Ausgangswelle 7b vorgesehen.

Eine Besonderheit des Variators 6b besteht darin, daß die Hilfswelle 65 eine zusätzliche Ausgangswelle bzw. einen zusätzlichen Abtrieb (Nebenabtrieb) bildet und beipsielsweise zum Antrieb von weiteren Nebenagregaten dient. Für diesen Zweck ist auf der Welle 65 eine Riemenscheibe 70 vorgesehen.

Die Welle 65 besitzt eine relativ konstante Geschwindigkeit, so daß auch für diese weiteren Nebenaggregate ein relativ konstanter Antrieb gewährleistet ist.

Die Übertragungsmittel 66 können beispielsweise auch von einem mechanischen Getriebe mit stufenlos einstellbarer Übersetzung gebildet sein.

## Patentansprüche

1. Antriebsaggregat, insbesondere für Fahrzeuge, mit einem Verbrennungsmotor (1) und mit von diesem angetriebener Motorwelle (2), die über einen eine Eingangswelle (7a) aufweisenden stufenlos arbeitenden Variator und ein eine Ausgangswelle (7b) sowie wenigstens drei umlaufende und miteinander zusammenwirkende Elemente (67/68, 69, 63) aufweisendes Überlagerungsgetriebe (62) ein Hilfsaggregat (5) antreibt, wobei der Variator eine gesteuerte Überlagerungsleistung an das Überlagerungsgetriebe zuführt oder wobei das Überlagerungsgetriebe eine gesteuerte Überlagerungsleistung an den Variator rückführt, wobei ein erstes umlaufendes Element (67/68) über die Eingangswelle (7a) des Variators antriebsmäßig mit der Motorwelle (2) verbunden ist, wobei ein zweites umlaufendes Element (69) die Ausgangswelle (7b) und somit das Hilfsaggregat (5) antreibt, und wobei ein drittes umlaufendes Element 63) über eine weitere Welle (65) des Variators mit diesem derart zusammenarbeitet, daß sich durch die Überlagerungsleistung eine in Abhängigkeit von einer Steuereinrichtung über Steuerkriterien gesteuerte Drehzahl für das angetriebene Hilfsaggregat (5) ergibt,
dadurch gekennzeichnet,
daß die weitere Welle des Variators als Ausgangswelle (65) zum Anschluß eines weiteren Hilfsaggregates ausgebildet ist.

2. Antriebsaggregat nach Anspruch 1,
dadurch gekennzeichnet, daß das weitere Hilfsaggregat eine Lichtmaschine ist.

3. Antriebsaggregat nach Anspruch 1 oder 2,
dadurch gekennzeichnet, daß das Hilfsaggregat ein Lader (59) ist.

4. Antriebsaggregat nach einem der Ansprüche 1 bis 3,
dadurch gekennzeichnet, daß das Überlagerungsgetriebe ein Planetenradgetriebe mit einem Sonnenrad (69), einem Hohlrad (63) und wenigstens einem auf einem Planetenradträger (67) vorgesehenen Planetenrad (68) ist.

5. Antriebsaggregat nach einem der Ansprüche 1 bis 4,
dadurch gekennzeichnet, daß der Variator mit elektrischen Mitteln, vorzugsweise in Form einer Generator-Motor-Anordnung, ausgebildet ist.

6. Antriebsaggregat nach einem der Ansprüche 1 bis 4,
dadurch gekennzeichnet, daß der Variator mit hydraulischen Mitteln, vorzugsweise in Form einer Pumpen-Motor-Anordnung ausgebildet ist.

7. Antriebsaggregat nach einem der Ansprüche 1 bis 4,
dadurch gekennzeichnet, daß der Variator als Keilriemenumschlingungsgetriebe ausgebildet ist.

8. Antriebsaggregat nach einem der Ansprüche 1 bis 7,
dadurch gekennzeichnet, daß die Steuereinrichtung, die vorzugsweise hydraulisch ausgebildet ist, über wenigstens eine Steuerleitung, vorzugsweise eine elektrische Steuerleitung, steuerbar ist.

## Claims

1. Drive unit, in particular for vehicles, with an intemal combustion engine (1) and with a motor shaft (2) driven by it, this [motor shaft] driving an auxiliary aggregate (5) via an infinitely adjustable variable speed device (variator) which has an input shaft (7a), and via an overdrive gear (62) which has an output shaft (7b) as well as at least three revolving elements (67/68, 69, 63) which interact with one another; with the variable speed unit supplying to the overdrive gear a controlled overdrive output, or with the overdrive gear supplying a controlled overdrive output back to the variable speed unit, with a first revolving element (67/68) being connected with the motor shaft (2) via the input shaft (7a) of the variable speed unit in a driving manner, with a second revolving element (69) driving the output shaft (7b) and thus the auxiliary aggregate (5), and with a third revolving element (63) acting together with a further shaft (65) of the variable speed unit, in such a way that through the overdrive output, depending on a control device which is controlled via control criteria, a rotational speed is provided for the driven auxiliary aggregate (5), characterised in that the further shaft of the variable speed unit is designed as an output shaft (65) for connecting a further auxiliary aggregate.

2. Drive unit in accordance with claim 1, characterised in that the further auxiliary aggregate is a generator.

3. Drive unit in accordance with claim 1 or 2, characterised in that the further auxiliary aggregate is a charger (59).

4. Drive unit in accordance with one of the claims 1 to 3, characterised in that the overdrive gear is a planetary gear with a sun wheel (69), a ring gear (63), and at least one planet wheel (68) provided on a planet carrier (67).

5. Drive unit in accordance with one of the claims 1 to 4, characterised in that the variable speed unit is designed with electrical materials, preferably in the form of a generator/motor arrangement.

6. Drive unit in accordance with one of the claims 1 to 4, characterised in that the variable speed unit is designed with hydraulic materials, preferably in the form of a pump/motor arrangement.

7. Drive unit in accordance with one of the claims 1 to 4, characterised in that the variable speed unit is designed as a variable V-belt (wrap-around) drive.

8. Drive unit in accordance with one of the claims 1 to 7, characterised in that the control device, which is preferably designed hydraulically, can be controlled via at least one control line, preferably an electrical control line.

## Revendications

1. Groupe de transmission, en particulier pour véhicules, comprenant un moteur à combustion interne (1) et un arbre moteur entraîné par celui-ci qui entraîne un groupe auxiliaire (5) par l'intermédiaire d'un variateur à action continue présentant un arbre d'entrée et d'un engrenage de recouvrement (62) présentant un arbre de sortie (7b) ainsi qu'au moins trois éléments rotatifs coopérant entre eux (67/68, 69, 63) , le variateur appliquant une puissance de recouvrement commandée à l'engrenage de recouvrement ou l'engrenage de recouvrement renvoyant une puissance de recouvrement au variateur, une premier élément rotatif (67/68) étant relié avec faculté d'entraînement à l'arbre moteur (2) par l'intermédiaire de l'arbre d'entrée (7a), un deuxième élément rotatif (69) entraînant l'arbre de sortie (7b) et ainsi le groupe auxiliaire (5), et un troisième élément rotatif (63) coopérant avec le variateur par l'intermédiaire d'un arbre supplémentaire (65) de telle sorte qu'il résulte de la puissance de recouvrement une vitesse de rotation commandée par des critères de commande en fonction d'un dispositif de commande pour le groupe auxiliaire entraîné (5), caractérisé en ce que l'arbre supplémentaire du variateur est conçu comme un arbre de sortie (65) pour la liaison à un autre groupe auxiliaire.

2. Groupe de transmission suivant la revendication 1, caractérisé en ce que le groupe auxiliaire supplémentaire est une génératrice.

3. Groupe de transmission suivant la revendication 1 ou 2, caractérisé en ce que le groupe auxiliaire est un compresseur d'alimentation (59).

4. Groupe de transmission suivant l'une quelconque des revendications 1 à 3, caractérisé en ce que l'engrenage de recouvrement est un engrenage planétaire constitué d'une roue solaire (69), d'une couronne de train planétaire (63) et d'au moins un pignon satellite (68) prévu sur un porte-pignons satellites (67).

5. Groupe de transmission suivant l'une quelconque des revendications 1 à 4, caractérisé en ce que le variateur est conçu avec des moyens électriques, de préférence sous la forme d'un agencement générateur-moteur.

6. Groupe de transmission suivant l'une quelconque des revendications 1 à 4, caractérisé en ce que le variateur est conçu avec des moyens hydrauliques, de préférence sous la forme d'un agencement pompes-moteur.

7. Groupe de transmission suivant l'une quelconque des revendications 1 à 4, caractérisé en ce que le variateur se présente sous la forme d'un engrenage de contact à courroie trapézoïdale.

8. Groupe de transmission suivant l'une quelconque des revendications 1 à 7, caractérisé en ce que le dispositif de commande, constitué de préférence de moyens hydrauliques, peut être commandé par au moins une ligne pilote, de préférence une ligne pilote électrique.
